# EUROPEAN PATENT SPECIFICATION

(11) **EP 1 406 937 B1**
(45) Date of publication and mention of the grant of the patent: **15.12.2004**
(21) Application number: 02755022.7
(22) Date of filing: 25.06.2002
(51) Int. Cl.: C08F 283/00, C08F 287/00, C08L 33/06, C08L 67/00, C08L 75/04, C08L 77/00

(54) **HEAT AND OIL RESISTANT THERMOPLASTIC ELASTOMER**
WÄRME- UND ÖLBESTÄNDIGES THERMOPLASTISCHES ELASTOMER
ELASTOMERE THERMOPLASTIQUE RESISTANT A LA CHALEUR ET AUX HUILES

(30) Priority: 25.06.2001 FI 20011354
(43) Date of publication of application: 14.04.2004
(73) Proprietor: Optatech Corporation, 02200 Espoo (FI)
(72) Inventor: HEISKANEN, Tomi, FIN-02200 Espoo (FI); BERGSTRÖM, Christer, FIN-02170 Espoo (FI); LAMPINEN, Johanna, FIN-06100 Porvoo (FI); NURMINEN, Ville, FIN-00740 Helsinki (FI)
(74) Representative: Sundman, Christoffer
(86) International application number: PCT/FI2002/000557
(87) International publication number: WO 2003/000758

(56) References cited:
- EP-A2- 0 308 871
- US-A- 5 011 887
- US-A- 5 300 573
- US-A- 5 981 665
- US-A- 6 005 052
- DATABASE WPI Week 199421, Derwent Publications Ltd., London, GB; Class A18, AN 1994-173919, XP002972902 & JP 6 116 472 A (UBE CYCON LTD) 26 April 1994
- DATABASE WPI Week 200062, Derwent Publications Ltd., London, GB; Class A17, AN 2000-641672, XP002972903 & JP 2000 234054 A (YOKOHAMA RUBBER CO LTD) 29 August 2000

## Description

### Background of the invention

### Field of Invention

The present invention relates generally to thermoplastic elastomers with good heat and oil resistance. In particular, the present invention concerns a novel thermoplastic elastomer having excellent oil resistance at high temperatures along with elastomeric flexibility, superior mechanical strength and mouldability. The novel elastomer and compositions thereof can be used as materials for various moulded parts.

### Description of Related Art

There is a need for modified heat resistant engineering polymers with increased softness and improved oil resistance. Such polymers would have applications for example as substitutes for vulcanised rubber in the automotive industry. Typical heat resistant engineering polymers are, *inter alia*, crystalline polymers including polyamides (e.g. PA-6) and polyesters (e.g. PET and PBT), and amorphous engineering polymers, such as polycarbonate (PC), styrene/acrylonitrile (SAN) and acrylonitrile/butadiene/styrene (ABS).

In the past, TPE's composed of a continuous phase of a heat resistant engineering polymer and a dispersed phase of an acrylate co/terpolymer have been developed. In all these cases the cross-linking of the dispersed phase has taken place in the compounding process (dynamic vulcanization). Especially Advanced Elastomer Systems Inc. (AES) has worked in this field (US 5,300,573; US 5,523,350; US 5,589,544; and US 5,591,798). The continuous phase used in the prior art consists of linear polyesters, such as polyalkylene-terephthalate and -isophthalate or copolyesters thereof (PET, PBT etc.). The dispersed phase is typically formed by acrylate rubbers, such as polyacrylate rubbers and acrylic ester copolymer rubbers, preferably provided with functional groups, such as acid, hydroxy, epoxy, active halogen and similar groups, as cross-linking sites. A typical dispersed phase is an ethylene-methylacrylate-acrylic acid terpolymer (supplied by Du Pont under the trade name Vamac ). The cross-linking agents used include polyfunctional chemical compounds, which covalently bond with the reactive functional groups of the rubber forming polymers. If the functional groups in the rubber-forming polymer are carboxylic acid or acid anhydride groups it is possible to use polyfunctional crosslinking agents with hydroxy, amine, isocyanate or epoxy groups.

The prior art elastomers discussed above have improved elastomeric properties. However, they fail simultaneously to meet the requirement of softness, proper temperature resistance and good oil resistance at high temperatures.

It is known in the art that the properties of polyolefin-based thermoplastic elastomers (TPE's) can be modified with solid state grafting and polymerization of the polyolefins with acrylate monomers. This technology has been been developed by Optatech Corporation and it is presented, for instance, in EP Patents Nos. 0 418 861, 0 476 960 and 0 554 058, FI Patent No. 95038 and US Patent No. 5 993 696 and in EP Patent Applications Nos. 95941099, 98922816.8 and 98660048.4. The modified TPE's, which are commercially available under the trade name PACREL®, exhibit excellent mechanical properties including elastomeric flexibility, creep resistance at high temperature, superior mechanical strength and mouldability. The heat and oil resistances of the TPE's are, however, limited by the melting points of the polyolefin-based continuous phases.

Attempts to use a similar approach as for the production of PACREL in the case of engineering polymers have, however, failed. Thus, it has turned out that the above-mentioned crystalline engineering polymers cannot be impregnated with acrylate monomers, whereas amorphous engineering polymers become sticky and they partly dissolve in the acrylate phase. It would appear that, for instance butylacrylate, which is rather hydrophobic, has a driving force from the hydrophilic water phase towards the hydrophobic polyolefin phase. For this reason it can be impregnated into polyolefin pellets as outlined in the above-cited patents. However, with hydrophilic pellets, like polyamide, there is no such driving force. Even if the temperature is increased in order to increase the free volume in the polyamide pellets no significant impregnation takes place.

### Summary of the Invention

It is an object of the present invention to provide novel TPE's, which have good mechanical properties in combination with softness and good oil resistance at high temperatures.

It is a another object of the invention to provide a method of producing thermoplastic elastomers.

These and other objects, together with the advantages thereof over known elastomers, which shall become apparent from the specification which follows, are accomplished by the invention as hereinafter described and claimed.

Working with hydrophilic polymers in connection with the present invention, we have now surprisingly found that it is possible to impregnate TPE's based on engineering polymers, such as polyesters, polyamides and polyurethane, with large amounts of acrylate monomers even at rather low temperatures if the raw-materials contain hydrophilic soft segments. The proportion of soft segments to the hard segments of the modified TPE's is usually about 1:99 to 90:10, preferably 5:95 to 80:20 (calculated by weight). A minimum amount is needed for achieving impregnation and at the very high amounts of more than 90 % the mechanical properties of the engineering polymers are largely lost. The amount of acrylate monomers, which can be incorporated into the polymer by means of the present invention is generally from 1 to 90 parts by weight, in particular 10 to 70 parts by weight, of the total polymer (the engineering soft block polymer + polymerized, cross-linked acrylate).

The finding that it is possible to incorporate into engineering polymers acrylates and similar monomers which form polymers having low glass transition temperature and which are capable, after absorption, polymerization and cross-linking, e.g. by the radical mechanism, of forming thermoplastic elastomers, was unexpected because many of the modified TPE's are even more hydrophilic than the afore-mentioned engineering polymers from which they are derived. Preferably, the polyester, polyamide and polyurethane based TPE's, which can be used as raw materials, contain hydrophilic soft segments of the polyether or polyester types. It would appear that the flexibility of the soft segments probably contributes to a very efficient impregnation of the TPE's in spite of their hydrophilic character.

It was also surprising and unexpected that the radical polymerization of the acrylate monomers includes grafting of these matrixes which do not contain very much labile hydrogens like in polyolefins.

More specifically, the thermoplastic elastomers of the present invention is mainly characterized by what is stated in the characterizing part of claim 1.

The method according to the present invention is mainly characterized by what is stated in the characterizing part of claim 18.

Considerable advantages are obtained by the present invention. Thus, by incorporating a cross-linked polyacrylate phase into a block-elastomer based on an engineering polymer, such as a polyester, polyamide or polyurethane, softer compounds are obtained and these can be made even softer by adding a plasticizer. Corresponding heat-resistant polycondensation polymers without soft segments cannot absorb enough acrylates. Polyacrylates and plasticizers also decrease the cost of the polymer or polymer composition which can be even further reduced by adding engineering polymers like PET, PBT, PA-6, PA-66 and/or fillers (which of course increase the hardness).

With many compounding formulations the compounds described above can stand IRM 903 oil at temperatures above 150 °C whereas the newest family of PP-based Pacrel can stand IRM 903 up to 125 °C.

TPE's made by impregnating and polymerizing polyester-, polyamide-, polyurethane- etc. block-elastomers with alkyl(meth)acrylates, such as methylacrylate, ethylacrylate, butylacrylate and ethylhexylacrylate, and functional (meth)acrylates, including glycidyl-(meth)acrylate, (meth)arcylic acid, maleic anhydride and diacrylates, can be used as the only polymer component in the compounding process or they can be blended with polymers compatible with the continuous phase (PET, PBT, PA-6, PA-66 etc.) and/or polymers which are compatible with the dispersed phase (acrylonitrile and/or acrylate ester based vulcanized or non-vulcanized elastomers etc.). In the compounding stage also dynamic vulcanization can be done if very high cross-linking densities are needed. It is, however, an important feature of the present invention that dynamic vulcanization in the compounding stage is not needed because cross-linking of the dispersed phase takes place already in the polymerization stage. Plasticizers, fillers and additives are naturally also added in the compounding stage. Different compatibilizers which improve the adhesion between the two phases and hence the mechanical properties of the compounds can be added. The most suitable plasticizers are long-chain aliphatic esters such as adipates, trimellitates and citrates, and the most suitable functional groups for compatibilization are glycidyl groups.

Compared to dynamic vulcanization, the present invention provides homogeneous distribution of the cross-linked phase throughout the matrix polymer. Typically, the smaller the concentrations of the impregnated monomers are, the more difficult it becomes to obtain homogeneous distribution. In the present invention, the monomers are dissolved on molecular level. As a result of the good distribution, the present invention will provide even quality and consistency, better quality control and none of the diffusion problems typical of viscous materials. It should be pointed out that for products of the present kind, an even quality is of particular importance, any unreacted reactants will impair the product causing odours and discolouring. In particular, the conversion of the acrylate monomers must be as close to 100 % as possible.

The present process is also very uncomplicated and commercially viable and the dispersed polyacrylate becomes cross-linked already during the polymerization step so that, as mentioned, no dynamic vulcanization is needed.

Next, the invention will be examined more closely with the aid of a detailed description and with reference to some working examples.

### Detailed Description of the Invention

### Brief Description of the Drawings

Figure 1 shows for Hytrel® 3548 L, impregnated with butyl acrylate, the amount of monomer absorbed as the function of temperature,
Figure 2 shows for Hytrel® 5526, impregnated with ethyl acrylate, the amount of monomer absorbed as the function of temperature,
Figure 3 shows for Pebax® 2533 SN01, impregnated with ethyl acrylate, the amount of monomer absorbed as the function of temperature,
Figure 4 shows for Desmopan 955 U, impregnated with ethylacrylate, the amount of monomer absorbed as the function of temperature,
Figure 5 shows for Ultradur® B 6550, impregnated with butyl acrylate, the amount of monomer absorbed as the function of temperature,
Figure 6 shows for Ultramid® B3 S, impregnated with butyl acrylate, the amount of monomer absorbed as the function of temperature,

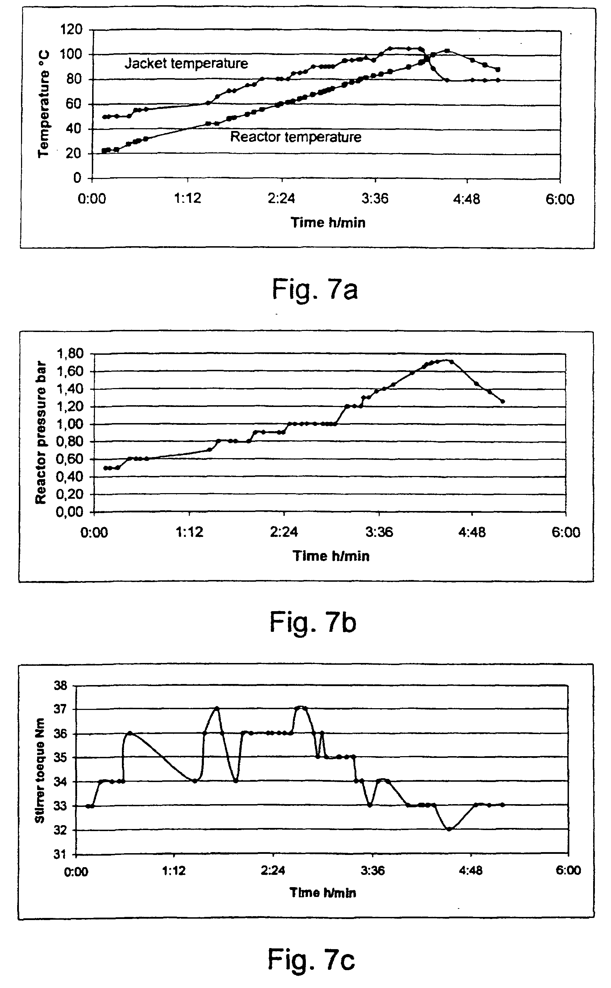

Figures 7a to 7c show for Hytrel® G3548L/ BA+GMA polymerization, the temperature profile, reactor pressure and stirrer torque,

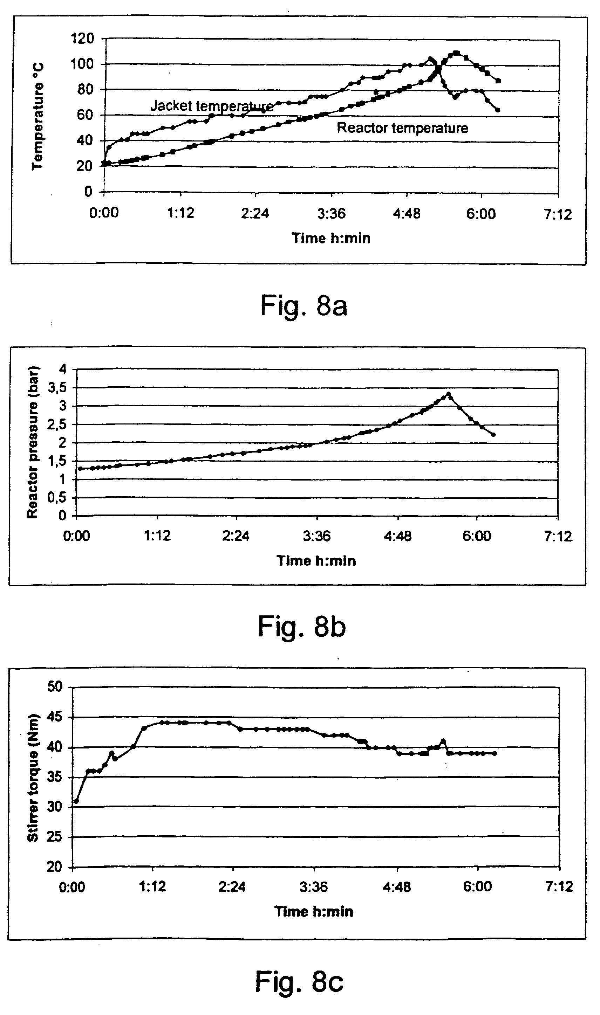

Figures 8a to 8c show for Hytrel® G3548L/EA+GMA polymerization, the temperature profile, reactor pressure and stirrer torque,

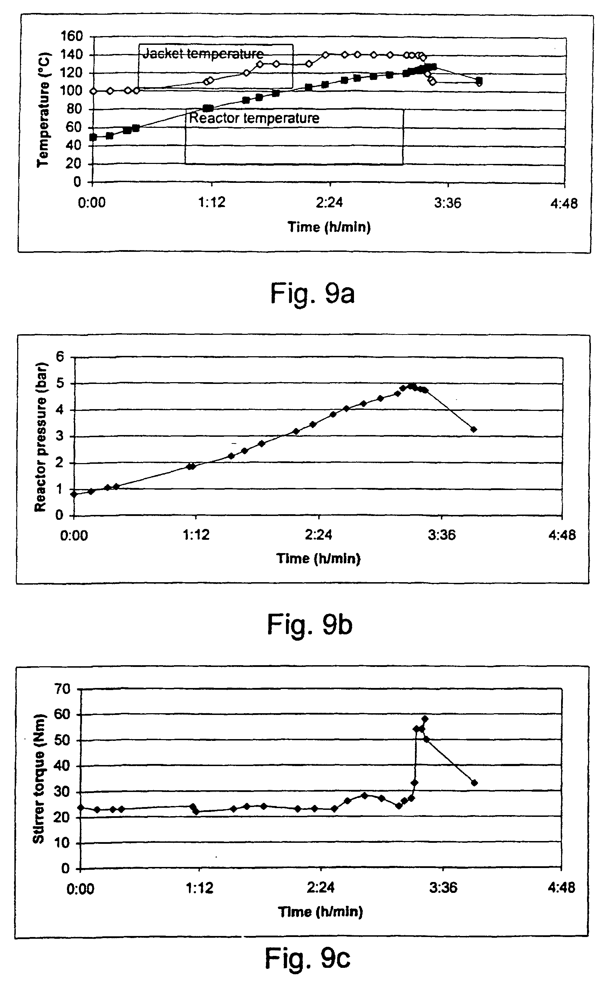

Figures 9a to 9c show for Hytrel® 5526/EA+GMA polymerization, the temperature profile, reactor pressure and stirrer torque,

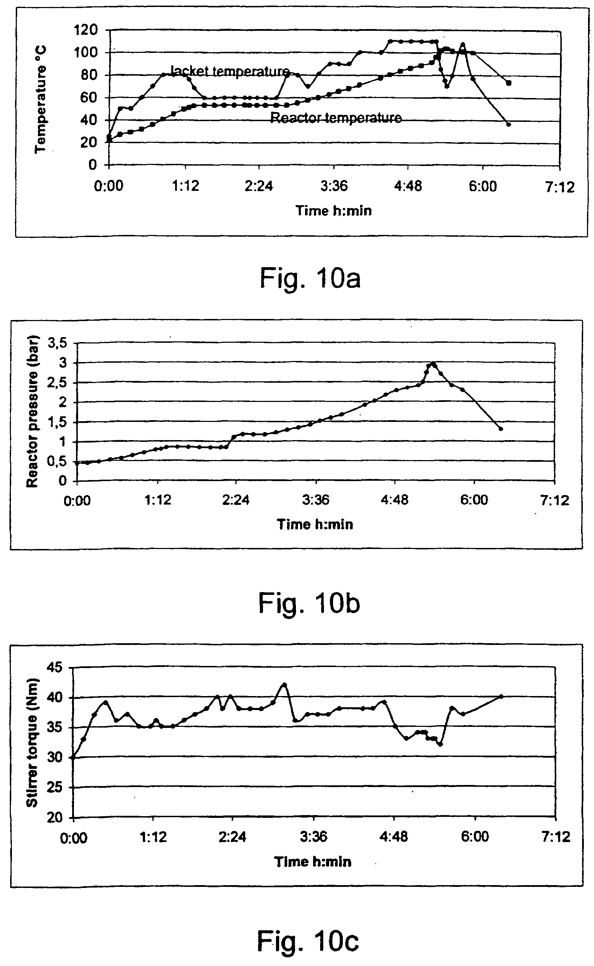

Figures 10a to 10c show for Pebax® 2533 SNO1/EA polymerization, the temperature profile, reactor pressure and stirrer torque, and

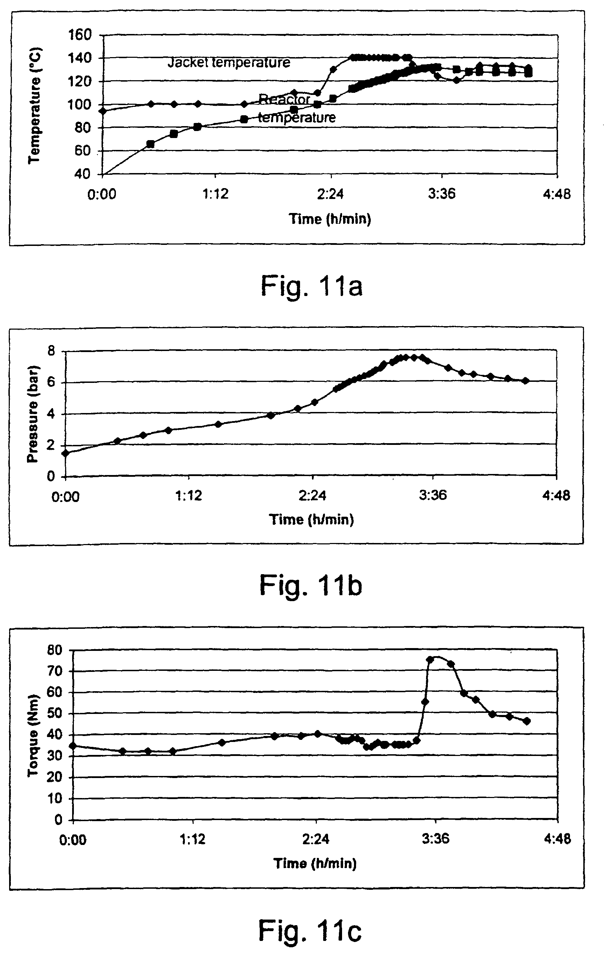

Figures 11a to 11c show for Desmopan® 95 5 U/ EA+GMA polymerization, the temperature profile, reactor pressure and stirrer torque.

It is an object of the present invention to produce oil resistant, soft thermoplastic elastomers with good mechanical properties. According to the invention, segmented heat resistant polycondensation copolymers can be made softer without loosing their excellent heat and oil resistance. Thus, the present invention comprises oil and heat resistant thermoplastic elastomers made by impregnating a heat resistant polycondensation copolymer containing soft segments, such as TPE-E, TPE-A or TPE-U, with acrylate monomers and peroxide and polymerizing, grafting and cross-linking inside the pellets.

The TPE's according to the present invention comprise a first phase containing a cross-linked polyacrylate polymer and a second phase containing a crystalline engineering polymer. According to a particularly preferred embodiment, the composition of the present blends is such that
*A.* 15-75 parts by weight is formed by a crystalline polymer forming the continuous phase of the composition and,
*B* 25-85 parts by weight is constituted by an at least partially cross-linked polyacrylate elastomer forming the discontinuous phase.
In particular, the blends contain 60 to 20 parts by weight of the crystalline polymer and 40 to 80 parts by weight of a polyacrylate.

The thermoplastic elastomers are produced in a similar way as described in the patents EP 0 418 861, EP 0 476 960, and EP 0 554 058 (solid state grafting and polymerization) but instead of polyolefin segmented heat resistant polycondensation copolymers are used. The polycondensation copolymers are impregnated with acrylate monomers and free radical polymerization initiator below the decomposition temperature of the initiator, after which the mixture is heated to a temperature sufficiently high to polymerize the acrylate monomer.

The impregnation is effected by mixing the components while the temperature of the reactor is gradually increased to the most suitable impregnation temperature, which can be obtained from the impregnation tests described in the following examples. The impregnation is carried out in such a way that the polymer pellets are added to the reactor together with the initiator mixed with the acrylate monomers, which can be methyl (meth)acrylate, ethyl (meth)acrylate, butyl (meth)acrylate, ethylhexylacrylate etc. The impregnation can be completed in the presence of 80-1000 parts by weight water, without water, or by discontinuously adding 1-60 % by weight of water.

The radical initiator preferably comprises a peroxide. These peroxides include diperoxides, peroxy esters and hydrogen peroxide and similar substances containing a -O-O- bond. Similar radicals can also be formed from substances containing diazo groups and other similar radical generators used during radical polymerization of acrylate monomers. As specific examples of peroxides, Triganox 145 - a peroxide which has a half life of 10 hours at 120 °C, can be mentioned.

Generally, the suitable acrylate monomers used for making the dispersed cross-linked phase of this invention are (meth)acrylates whose polymer have low glass transition temperature, i.e. they are rubber-like at room temperature and low temperature, preferably below - 20°C. Suitable acrylates are alkylacrylates having 1 or preferably 2 or more carbon atoms in the alkyl chain. Methacrylates having a glass temperature low enough are alkyl-methacrylates having 4 or more, preferably 8 or more carbon atoms in the alkyl chain. These monomers can be used alone or in mixtures of two or more monomers.

Generally, the elastomer phase may contain units derived from an alkyl ester of acrylic or methacrylic acid, wherein the alkyl group contains 1-10 carbon atoms.

Together with the above-mentioned monomers, smaller amounts of monomers having less carbon atoms in the carbon chain can also be used; in particular, a chemically functionalized acrylate or methacrylate may come into question. Glass transition temperature of the final products can thus be tailored. According to this invention, one or more functional monomers are added to the acrylate monomer. Typical functional monomers are: glycidyl methacrylate, 2-t-butylaminoethyl methacrylate, polypropyleneglycol monomethacrylate, and mono-methacryloyloxy-ethylphthalate. Unsaturated acids and anhydrides, such as acrylic and methacrylic acid and maleic anhydride can also be used.

The cross-linking degree of the thermoplastic elastomer can be also modified by addition of, for instance, a diacrylate.

Generally, a cross-linking agent (a cross-linker) can be added. The cross-linker can be of a type containing several unsaturated groups. It can be a phenolic resin curative.

The polymerization of the acrylate monomers that have been absorbed inside the polymer pellets is initiated by increasing the temperature of the agitated reactor to the decomposition temperature of the initiator. When the polymerization is completed (no unreacted monomers), the reactor is cooled. It is essential that all of the monomer is consumed so that the radical reactions lead to cross-linking and grafting. The product is washed and dried. When high acrylate rubber contents are needed, the polymerization can be carried out in two or more steps. The product from the first polymerization step is added into the reactor together with acrylate monomers and initiator, and the procedure described above is repeated.

The polymers chosen to the tests were the crystalline engineering polymers polybutyleneterephthlate (PBT) and polyamide-6, as well as the segmented heat resistant polycondensation copolymers copolyester thermoplastic elastomer, copolyamide thermoplastic elastomer, and thermoplastic polyurethane. These thermoplastic elastomers can have soft blocks based on polyether, polyester, or any other soft block. Both of the monomers n-butyl acrylate and ethyl acrylate were used in the tests. Also the acrylate comonomer glycidylmethacrylate was used in most tests.

In the impregnation tests it was found out that the crystalline engineering polymers absorbed only very low quantities of acrylate monomer. Even if the temperature was increased over 100 °C, no significant impregnation took place. On the contrary, the segmented polycondensation copolymers absorbed large amounts of the monomer even at temperatures below 80 °C. It has thus been proven that the segmented polycondensation copolymers are well suited to the solid state grafting and polymerization process, and their properties can thereby be modified in a very beneficial way, whereas the crystalline engineering polymers give poor results. The soft segments are typically amorphous and, accordingly, exhibit no crystalline melting point.

After the polymerization stage the polyacrylate phase constitutes a cross-linked, interpenetrating polymer network in the segmented polycondensation copolymer. When the material is compounded under high shear conditions, a more favourable morphology with small polyacrylate particles evenly dispersed in the plastic matrix is produced.

Typically, the weight ratio between polyacrylate and matrix polymer is 0.1-5, preferably 0.5-2. The TPE can contain up to 90 % of soft segments, typically the TPE contains 1 to 80 wt-%, preferably 5 to 60 wt-% soft segments calculated from the weight of the copolymer.

The impregnation and polymerization can also be carried out in two or several steps. In the first step some 1 to 40 %, preferably 5 to 30 %, (by weight) of the total amount of acrylate monomer is absorbed and then in the subsequent step(s) the rest. By adding a small amount first and polymerizing it to form a dispersed phase within the polymer matrix it is possible to increase the total amount of dispersed acrylate polymer within the matrix.

### Properties of the polymerization products

The polymers produced in the polymerizations were used as the only polymer component in the compounding process. The resultant compounds were injection moulded into 2 mm thick plates, from which test specimens were punched out. The properties of the polymerization products were determined according to the methods given in Table 1.

It was found out, that the produced thermoplastic elastomers had high elongation combined with good oil resistance at elevated temperatures. Some compounds even had excellent oil resistance at 150 °C. Also, the compounds were very soft compared to the starting materials. For example, when the hardness of the starting material Hytrel® G3548L was 83 Shore A, the polymarization product had the hardness of 62 Shore A.

Accordingly, soft thermoplastic elastomers can be produced of the segmented polycondensation polymers without loosing the most beneficial properties of the latter: heat- and oil resistance. Because the polymerization products are very soft, they can be used in a much wider range of applications than the original polycondensation polymers. Also, the cost of the polycondensation polymers can be lowered by the invention.

### Blends with crystalline engineering polymers and/or elastomers

The polymerization products can be blended with crystalline engineering polymers and/or elastomers in order to modify their properties or to lower the cost of the products. Blends were produced using a Brabender mixing chamber.

In order to obtain useful products with desired properties it is essential that the crystalline engineering polymers are compatible with the continuous phase and the elastomers with the dispersed phase. Examples of crystalline engineering polymers are any kind of saturated polyester like PET, PBT, PEN, PCT, PCN, etc., and/or any type of polyamide like PA-6, PA-66, PA-11, PA-12, PA-46, and/or aromatic polyamides, and their copolymers. Also copolyester elastomer, copolyamide elastomer, and/or thermoplastic polyurethane can be added to the blend. Typical elastomers that can be added are acrylate-polymers like NBR, Chemigum, Sunigum, Vamac etc. The elastomers can be cross-linked or non-cross-linked.
polymers like NBR, Chemigum, Sunigum, Vamac etc. The elastomers can be cross-linked or non-cross-linked.

The resultant multiphase thermoplastic composition can be formed into various shapes by compression molding, injection molding, blow molding and extrusion having attractive thermoplastic elastomer performance.

Before compounding, plastic additives known *per se* can be added to the polymer blend according to the invention. In addition to crystalline engineering polymers and elastomers also plasticizer, compatabilizer, vulcanizer, filler, and additives can be added. The plasticizer can be an ester plasticizer. These additives comprise, for instance, pigments, stabilizers, colouring agents, lubricants, antistatic agents, fillers and fire retardants. An accelerator with several unsaturated groups can also be added. If desired, the additional substances can be premixed with, e.g., the polymer matrix before forming the polymer blend. The amounts of polymer additives are typically about 0.01 to 50 %, preferably about 10 to 35 % of the weight of the total thermoplastic elastomer composition.

The thermoplastic elastomer can be compounded after the impregnation and polymerization steps.

The compounds according to the invention are processed according to methods known *per se* in polymer technology to manufacture the final products.

The invention also comprises products containing a thermoplastic elastomer as described herein and which has been made by any processing method used for thermoplastics and thermoplastic elastomers.

As a result, thermoplastic elastomer compositions are obtained having good elastomeric characteristics and stress strain properties.

### The following non-limiting examples will illustrate the invention:

### Examples

### Polymer test methods

The samples were injection or compression moulded into ISO test bars and tested using the following test methods:

**Table 1.**

| **Test methods** | |
|---|---|
| PROPERTY | METHOD |
| Tensile strength, ultimate elongation (speed 500 mm/min) | ISO 37 |
| Compression set | ASTM D 395 |
| Hardness | ISO 48 |
| Oil resistance | ISO 1817 |

### Polymers/monomers used

### Copolyester thermoplastic elastomer (COPE)

Hytrel® thermoplastic elastomers (DuPont) are block copolymers consisting of a hard segment of poly(butylene terephthalate) and a soft segment based on long-chain polyether glycols. There are two main groups depending of the soft segment used: standard and high performance.
Hytrel® G3548L: Standard low modulus moulding and extrusion grade. Contains colour-stable antioxidants and some UV-stabilizer.
Hytrel® 5526: High performance medium modulus moulding grade. Contains colour-stable antioxidants.

**Table 2.**

| **Properties of copolyester thermoplastic elastomers** | | | | |
|---|---|---|---|---|
| Property | Method | Unit | Hytrel® G3548L | Hytrel® 5526 |
| Tensile stress at break | ISO 527 | MPa | 10.3 | 40.0 |
| Elongation at break | ISO 527 | % | 200 | 500 |
| Melting point | ISO 3146 | °C | 156 | 203 |
| Vicat softening point | ISO 306 | °C | 77 | 180 |
| Density | ISO 1183 | g/cm³ | 1.15 | 1.20 |
| Hardness, | ISO 868 | ° | | |
| Shore D | | | 35 | 55 |
| Shore A | | | 83 | |
| Melt flow rate | ISO 1133 | g/10 min | 10 | 18 |
| | | | (190 °C, 2.16 kg) | (220 °C, 2.16 kg) |

### Polyether block amide (PEBA)

Pebax® 2533 SN01 (Atofina): Standard general purpose grade. Contains UV-stabilizers.

**Table 3**

| **Properties of polyether block amide** | | | |
|---|---|---|---|
| Property | Method | Unit | Pebax® 2533 SN01 |
| Tensile stress at break | ISO 527 | MPa | 29 |
| Elongation at break | ISO 527 | % | 715 |
| Melting point | ASTM D 3418 (DSC endothermic peak) | °C | 133.5 |
| Vicat softening point | ASTM D 1525 Load: 1 daN | °C | 60 |
| Density | ISO 1183 | g/cm³ | 1.01 |
| Hardness, Shore D | IS0868 | ° | 25 |
| Resistance to ASTM #3 oil, 100 °C/3 days | | | Severe effect |

### Thermoplastic polyurethane (TPU)

Desmopan® 955 U (Bayer) consists of diisocyanates and long-chain and short-chain diols. Ether based Desmopan®-grades have good hydrolysis and microbe resistance and an excellent low-temperature flexibility. They are used for example in applications requiring flexibility or impact strength at very low temperatures.

Desmopan® 955 U is a UV-stabilised injection molding grade with good impact strength.

**Table 4**

| **Properties of thermoplastic polyurethane** | | | |
|---|---|---|---|
| Property | Method | Unit | Desmopan® 955 U |
| Tensile stress at break | ISO 37 | MPa | 45 |
| Elongation at break | ISO 37 | % | 360 |
| Module 100 % | ISO 37 | MPa | 22 |
| Module 300 % | ISO 37 | MPa | 42 |
| Density | ISO 1183 | g/cm³ | 1.18 |
| Compression set 24 h, 70 °C | ISO 815 | % | 46 |
| Hardness, Shore D Shore A | ISO 868 | | 55 97 |
| Processing conditions, Melt temperature at injection moulding | | °C | 215-235 |

### Poly(butylene terephthalate) (PBT)

Ultradur® B 6550 (BASF) is a high-viscosity extrusion grade.

### Polyamide-6 (PA-6)

Ultramid® B3S (BASF)

### NBR elastomer

Chemigum P35 (Goodyear). Pre-crosslinked, low gel, medium ACN, medium viscosity NBR elastomer in fine powder form.

### n-butyl acrylate (BA), ethyl acrylate (EA) (BASF)

**Glycidyl methacrylate** (NOF Europe)

### 2,5-bis(tert-butylperoxy)-2,5-dimethyl-3-hexyne (Trigonox 145 E85, Akzo Chemicals, t_{½} 10 hours at 120 °C)

### tert-butylperoxy isopropyl carbonate, 75 % solution in mineral turpentine (Trigonox BPIC C75, Akzo Chemicals, t_{½} 10 hours at 98 °C)

### Example 1

### Impregnation (Descriptions and Curves)

The impregnation test method is used to study the diffusion of a monomer (liquid phase) into a polymer as a function of time and temperature in order to find out whether it is possible to use the polymer in Optatech's proprietary Solid State Polymerization Process (mentioned above). Also the right impregnation temperature and time can be determined using this method. Since this test is made under ideal conditions it gives the maximum amount of monomer absorbed in a given time or the minimum time needed for a certain impregnation under real process conditions.

The test method is described in the following. About ten testing tubes were placed into an oil bath. They were identical and each of them contained the same amount of polymer and monomer. The test tubes were filled with nitrogen and closed. They were put to a stand that was then placed into an oil bath.

The oil was warmed up gradually starting from room temperature. The temperature was raised stepwise at the rate of 10 °C/20 min. The test tubes were removed from the oil bath at 20 min intervals and the exact temperature at the time of removal was observed.

The below listed impregnation tests were completed. The results from the impregnation tests are given in the following.

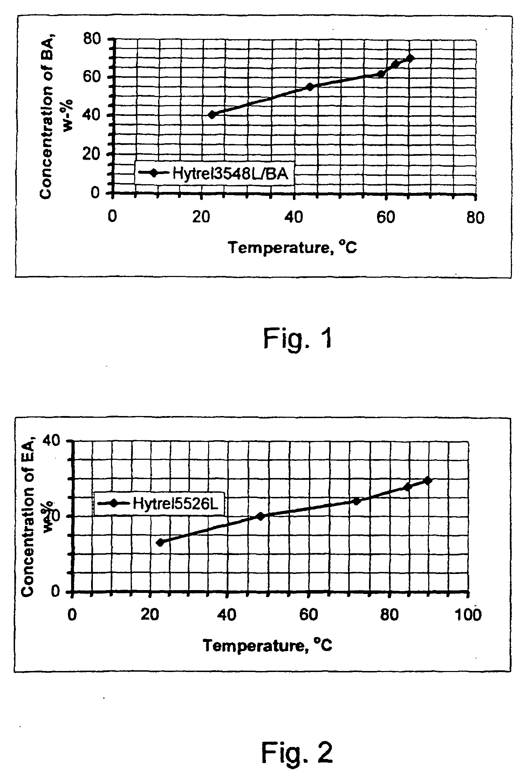

Fig. 1 Hytrel® G3548L - butyl acrylat
Fig. 2 Hytrel® 5526 - ethyl acrylate

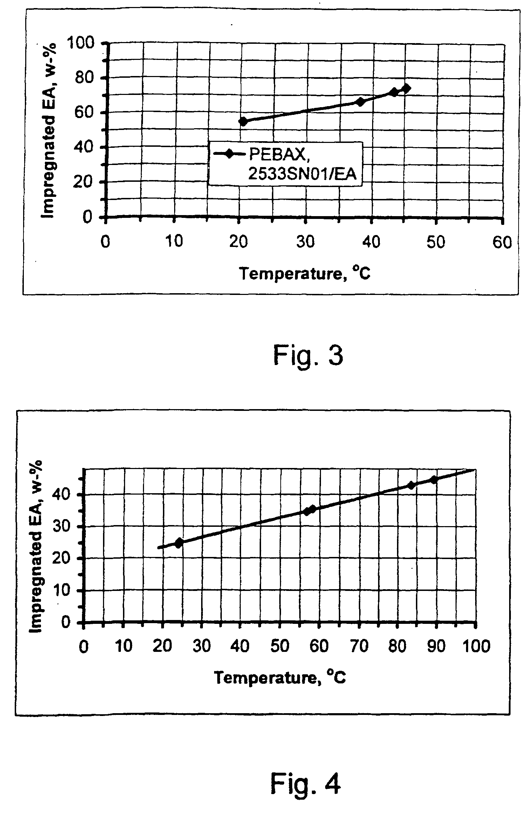

Fig. 3 Pebax® 2533 SN01 - ethyl acrylate
Fig. 4 Desmopan® 955 U - ethyl acrylate

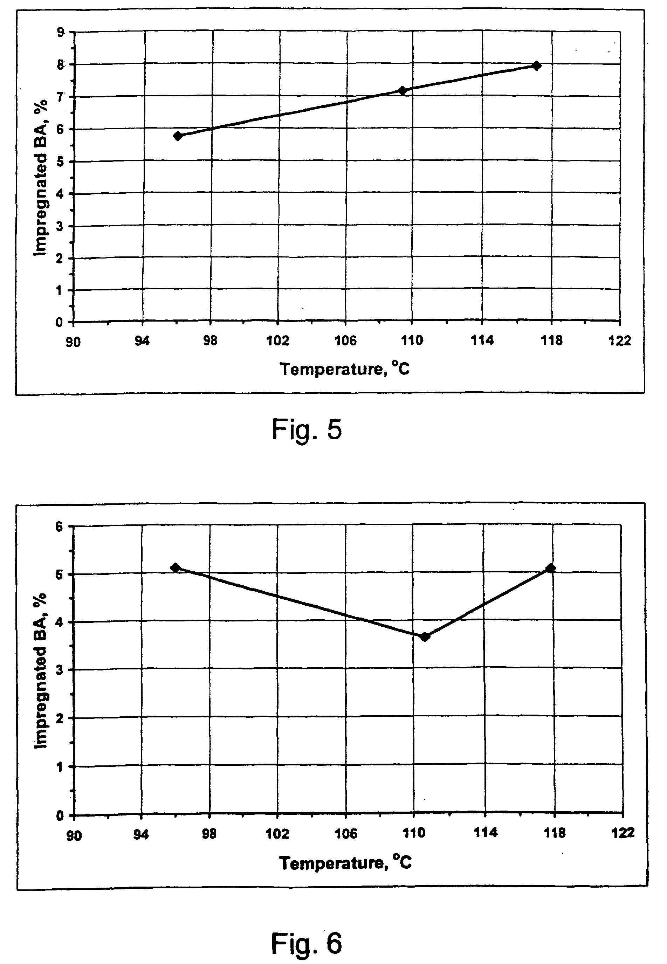

Fig. 5 Ultradur® B 6550 - butyl acrylate
Fig. 6 Ultramid® B3S - butyl acrylate

The crystalline engineering polymers absorbed only very low quantities of acrylate monomer. Even if the temperature was increased over 100 °C, no significant impregnation took place. On the contrary, the segmented polycondensation copolymers absorbed large amounts of the monomer even at temperatures below 80 °C.

### Example 2

### Polymerizations

The polymerizations were carried out in a 5 l laboratory scale reactor. The plastic pellets, water, butyl or ethyl acrylate monomer, and initiator were fed into the reactor. In most polymerizations also glycidyl methacrylate was used. The reactor was purged several times with nitrogen. During the polymerization the reactor had a nitrogen atmosphere with 0.5 bar overpressure. The stirrer was on during the polymerization.

While it was found out in the impregnation tests that the soft elastomers (Hytrel® G3548L and Pebax® 2533 SN01) absorbed large amounts of monomer at low temperatures, the polymerization was also carried out at low temperatures. The low-temperature initiator Trigonox BPIC was used in these polymerizations. The harder elastomers needed to be polymerized at higher temperatures because of the higher impregnation temperature. The initiator Trigonox 145 E85 was used in these polymerizations.

When the 55 Shore D elastomer Hytrel® 5526 L was used, the polymerization was done in two steps. A 70 % rubber content can be obtained in this way. During the first step the temperature of the reactor's jacket was increased gradually up to 120 °C during 3 hours. The pellets first absorbed the monomer present in the system. The temperature of the reactor was observed and a sharp rise indicated polymerization that took place inside the pellets. After this the reactor was cooled down and the pellets were taken out, washed, and dried.

In the second polymerization step the above-described sequence was repeated. The pellets produced in the first polymerization step were fed into the reactor together with water, monomers, and initiator. The temperature was again increased and the monomer was polymerized as the temperature was increased.

The following polymerizations were done:
- Hytrel® G3548L/BA+GMA
- Hytrel® G3548L/EA+GMA
- Hytrel® 5526/EA+GMA
- Pebax® 2533 SN01/EA
- Desmopan® 955 U/EA+GMA

**Table 5.**

| **Polymerization recipes** | | | | | |
|---|---|---|---|---|---|
| | Hytrel® G3548L/BA+GMA | Hytrel® G3548L/EA+GMA | Hytrel® 5526/EA+GMA | Pebax® 2533 SN01/EA | Desmopan® 955 U/EA+GMA |
| **FIRST STAGE** | | | | | |
| Hytrel® G3548L | 1000 g | 1000 g | | | |
| Hytrel® 5526 | | | 1200 g | | |
| Pebax® 2533 SN01 | | | | 800 g | |
| Desmopan® 955 U | | | | | 750 g |
| Butyl acrylate | 900 g | | | | |
| Ethyl acrylate | | 900 g | 780 g | 800 g | 875 g |
| Glycidyl methacrylate | 100 g | 100 g | 20 g | | 75 g |
| Trigonox BPIC C75 | 4 g | 3 g | | 4.8 g | |
| Trigonox 145 E85 | | | 0.48 g | | 0.45 g |
| Water | 21 | 21 | 21 | 2.41 | 2.51 |

| **SECOND STAGE** | | | | | |
|---|---|---|---|---|---|
| Pellets from the first stage | | | 1000 g | | |
| Butyl acrylate | | | | | |
| Ethyl acrylate | | | 910 g | | |
| Glycidyl methacrylate | | | 90 g | | |
| Trigonox 145 E85 | | | 0.6 g | | |
| Water | | | 21 | | |

**Table 6.**

| **Rubber content of the polymerization products** | | | | | |
|---|---|---|---|---|---|
| | Hytrel® G3548L/BA+GMA | Hytrel® G3548L/EA+GMA | Hytrel® 5526/EA+GMA | Pebax® 2533 SN01/EA | Desmopan® 955 U/EA+GMA |
| Acrylate rubber content (w-%) | 50 | 50 | 66 | 50 | 48 |

**Table 7.**

| **Properties of the polymerization products** | | | | | |
|---|---|---|---|---|---|
| | Hytrel® G3548L/BA+GMA | Hytrel® G3548L/EA+GMA | Hytrel® 5526/EA+GMA | Pebax® 2533 SN01/EA | Desmopan® 955 U/EA+GMA |
| Hardness, Shore A | 62 | 65 | 71 | 58 | 76 |
| Tensile strength, MPa, MD | 4.1 | 4.8 | 7.2 | 6.2 | 8.5 |
| Tensile strength, MPa, TD | 4.4 | 5.4 | 6.1 | 5.2 | 8.2 |
| Elongation, %, MD | 114 | 155 | 129 | 713 | 266 |
| Elongation, %, TD | 289 | 322 | 243 | 736 | 374 |
| Modulus 100 %, MPa, MD | 4.2 | 4.3 | 6.5 | 2.3 | 5.4 |
| Modulus 100 %, MPa, TD | 2.2 | 2.6 | 3.6 | 1.6 | 4.2 |
| Compression set 22 h | | | | | |
| 70 °C | 41 % | 46 % | 32 % | 70 % | 66 % |
| 125 °C | 70 % | 68 % | 38% | 97% | 91% |
| Oil resistance | | | | | |
| IRM 903/70 °C/22 h | +10 % | +7 % | +4 % | +24 % | +2 % |
| IRM 903/125 °C/22 h | +48 % | +20 % | +8 % | +61 % | +12 % |

### Example 3 Blends (Brabender)

Brabender mixing chamber, 40 g, 240 °C, 70 rpm

### Example 3 a

### Hytrel® G3548L/ EA+GMA blended with PBT; compression moulded plaques

**Table 8.**

| **Composition of compounds** | | | |
|---|---|---|---|
| | G3548L blend 1 | G3548L blend 2 | G3548L blend 3 |
| Hytrel® G3548L | | 70 % | |
| Hytrel® G3548L/EA+GMA | 100 % | | 70 % |
| Ultradur® B 6550 | | 30 % | 30 % |

**Table 9.**

| **Torque** | | | | | | | |
|---|---|---|---|---|---|---|---|
| Min. | 0 | 1 | 2 | 3 | 4 | 5 | 6 |
| G3548L blend 1 | 300 | 270 | 250 | 230 | 200 | 170 | 160 |
| G3548L blend 2 | 170 | 100 | 90 | 80 | 70 | 60 | 60 |
| G3548L blend 3 | 380 | 320 | 280 | 270 | 260 | 250 | 240 |

**Table 10.**

| **Properties** | | | |
|---|---|---|---|
| | G3548L blend 1 | G3548L blend 2 | G3548L blend 3 |
| Hardness, Shore A | 68 | 94 | 94 |
| Tensile strength, MPa | 3 | 8 | 7 |
| Elongation, % | 109 | 48 | 45 |
| Modulus 100 %, MPa | 3 | - | - |

### Example 3 b

### Blends of the polymerization products blended with crystalline engineering polymers and an elastomer; compression moulded plaques

Brabender mixing chamber, 40 g, 240 °C, 70 rpm
Blend 4: 70 % Hytrel® G3548L/BA+GMA + 30 %PA-6
Blend 5: 70 % Hytrel® G3548L/BA+GMA + 30 % Chemigum P35
Blend 6: 70 % Pebax® 2533 SN01/EA + 30 % PBT
Blend 7: 70 % Pebax® 2533 SN01/EA + 30 % PA-6
Blend 8: 70 % Pebax® 2533 SN01/EA + 30 % Chemigum P35

**Table 11.**

| **Properties** | | | | | |
|---|---|---|---|---|---|
| | Blend 4 | Blend 5 | Blend 6 | Blend 7 | Blend 8 |
| Hardness, Shore A | 93 | 54 | 85 | 83 | 46 |
| Tensile strength, MPa | 6 | 3 | 6 | 7 | 5 |
| Elongation, % | 41 | 111 | 96 | 137 | 436 |
| Modulus 100 %, MPa | - | 3 | - | 6 | 3 |

## Claims

1. A thermoplastic elastomer with good heat and oil resistance, **characterized in that** it is produced by impregnating a heat resistant polycondenzation copolymer containing soft segments with acrylate monomers and radical initiators and polymerizing and cross-linking the monomers inside the pellets.

2. The thermoplastic elastomer according to claim 1, wherein the segmented heat resistant polycondenzation copolymer has hard segments of polyester, polyamide and/or polyurethane.

3. The thermoplastic elastomer according to claim 1 or 2, wherein the segmented heat resistant polycondenzation copolymer has soft segments of polyether and/or polyester.

4. The thermoplastic elastomer according to any of claims 1 to 3, wherein the copolymer contains 1 to 80 wt-%, preferably 5 to 60 wt-% soft segments calculated from the weight of the copolymer.

5. The thermoplastic elastomer according to any of claims 1 to 4, wherein the acrylate monomers are selected from the group of methyl(meth)acrylate, ethyl(meth)acrylate, butyl(meth)acrylate, ethylhexyl(meth)acrylate, glycidyl(meth)acrylate, (methacrylic acid, maleic anhydride, and hexanediol(meth)acrylate.

6. The thermoplastic elastomer according to any of claims 1 to 5, wherein the radical initiator is a peroxide.

7. The thermoplastic elastomer according to any of the preceding claims, wherein the polymerized and cross-linked acrylate monomers form 1 to 90 parts by weight, in particular 10 to 70 parts by weight, of the total polymer.

8. The thermoplastic elastomer according to any of claims 1 to 7, wherein the impregnation and polymerization have been done in several steps.

9. The thermoplastic elastomer according to any of claims 1 to 8, wherein it has been compounded after the impregnation and polymerization steps.

10. The thermoplastic elastomer according to claim 9, wherein polymers compatible with the continuous phase and/or the dispersed phase have been added.

11. The thermoplastic elastomer according to claim 9 or 10, wherein a compatibilizer has been added.

12. The thermoplastic elastomer according to any of claims 9 to 11, wherein a plasticizer has been added.

13. The thermoplastic elastomer according to claim 12, wherein the plasticizer is an ester plasticizer.

14. The thermoplastic elastomer according to any of claims 9 to 13, wherein a cross-linker has been added.

15. The thermoplastic elastomer according to claim 14, wherein the cross-linker contains several unsaturated groups.

16. The thermoplastic elastomer according claim 14, wherein the cross-linker is a phenolic resin curative.

17. A product containing a thermoplastic elastomer according to any of claims 1 to 16, wherein it is made by any processing method used for thermoplastics and thermoplastic elastomers.

18. A method of producing a thermoplastic elastomer with good heat and oil resistance, **characterized by** impregnating a heat resistant polycondenzation copolymer containing soft segments with acrylate monomers and radical initiators and polymerizing and cross-linking the monomers inside the pellets.

## Patentansprüche

1. Thermoplastisches Elastomer mit guter Wärme- und Ölbeständigkeit, **dadurch gekennzeichnet, daß** es durch Imprägnieren eines weiche Segmente enthaltenden wärmebeständigen Polykondensations-Copolymers mit Acrylatmonomeren und Radikalstartern und Polymerisieren und Vernetzen der Monomeren im Inneren der Pellets hergestellt ist.

2. Thermoplastisches Elastomer nach Anspruch 1, wobei das segmentierte wärmebeständige Polykondensations-Copolymer harte Segmente aus Polyester, Polyamid und/oder Polyurethan aufweist.

3. Thermoplastisches Elastomer nach Anspruch 1 oder 2, wobei das segmentierte wärmebeständige Polykondensations-Copolymer weiche Segmente aus Polyether und/oder Polyester aufweist.

4. Thermoplastisches Elastomer nach irgendeinem der Ansprüche 1 bis 3, wobei das Copolymer 1 bis 80 Gew.-%, vorzugsweise 5 bis 60 Gew.-% weiche Segmente enthält, bezogen auf das Gewicht des Copolymers.

5. Thermoplastisches Elastomer nach irgendeinem der Ansprüche 1 bis 4, wobei die Acrylatmonomeren aus der Gruppe von Methyl(meth)acrylat, Ethyl(meth)acrylat, Butyl(meth)acrylat, Ethylhexyl(meth)acrylat, Glycidyl-(meth)acrylat, (Meth)acrylsäure, Maleinsäureanhydrid und Hexandiol(meth)acrylat ausgewählt sind.

6. Thermoplastisches Elastomer nach irgendeinem der Ansprüche 1 bis 5, wobei der Radikalstarter ein Peroxid ist.

7. Thermoplastisches Elastomer nach irgendeinem der vorhergehenden Ansprüche, wobei die polymerisierten und vernetzten Acrylatmonomere 1 bis 90 Gewichtsteile, insbesondere 10 bis 70 Gewichtsteile des gesamten Polymers bilden.

8. Thermoplastisches Elastomer nach irgendeinem der Ansprüche 1 bis 7, wobei die Imprägnierung und Polymerisation in mehreren Stufen durchgeführt wurden.

9. Thermoplastisches Elastomer nach irgendeinem der Ansprüche 1 bis 8, wobei es nach den Imprägnier- und Polymerisationsstufen compoundiert wurde.

10. Thermoplastisches Elastomer nach Anspruch 9, wobei Polymere zugesetzt wurden, die mit der kontinuierlichen Phase und/oder der dispersen Phase kompatibel sind.

11. Thermoplastisches Elastomer nach Anspruch 9 oder 10, wobei ein Kompatibilisierungsmittel zugesetzt wurde.

12. Thermoplastisches Elastomer nach irgendeinem der Ansprüche 9 bis 11, wobei ein Weichmacher zugesetzt wurde.

13. Thermoplastisches Elastomer nach Anspruch 12, wobei der Weichmacher ein Esterweichmacher ist.

14. Thermoplastisches Elastomer nach irgendeinem der Ansprüche 9 bis 13, wobei ein Vernetzungsmittel zugesetzt wurde.

15. Thermoplastisches Elastomer nach Anspruch 14, wobei das Vernetzungsmittel mehrere ungesättigte Gruppen enthält.

16. Thermoplastisches Elastomer nach Anspruch 14, wobei das Vernetzungsmittel ein Phenolharzhärter ist.

17. Produkt enthaltend ein thermoplastisches Elastomer nach irgendeinem der Ansprüche 1 bis 16, das mit irgendeinem für Thermoplaste und thermoplastische Elastomere verwendeten Verarbeitungsverfahren hergestellt ist.

18. Verfahren zur Herstellung eines thermoplastischen Elastomers mit guter Wärme- und Ölbeständigkeit, **gekennzeichnet durch** Imprägnieren eines weiche Segmente enthaltenden wärmebeständigen Polykondensations-Copolymers mit Acrylatmonomeren und Radikalstartern und Polymerisieren und Vernetzen der Monomeren im Inneren der Pellets.

## Revendications

1. Elastomère thermoplastique présentant une bonne résistance à la chaleur et aux huiles, **caractérisé en ce qu'**il est produit en imprégnant un copolymère de polycondensation résistant à la chaleur contenant des segments souples avec des monomères d'acrylate et des initiateurs radicalaires et en polymérisant et en réticulant les monomères à l'intérieur des pastilles.

2. Elastomère thermoplastique selon la revendication 1, dans lequel le copolymère de polycondensation résistant à la chaleur segmenté présente des segments durs de polyester, de polyamide et/ou de polyuréthane.

3. Elastomère thermoplastique selon la revendication 1 ou 2, dans lequel le copolymère de polycondensation résistant à la chaleur segmenté présente des segments souples de polyéther et/ou de polyester.

4. Elastomère thermoplastique selon l'une quelconque des revendications 1 à 3, dans lequel le copolymère contient de 1 à 80 % en poids, de préférence de 5 à 60 % en poids de segments souples calculé à partir du poids du copolymère.

5. Elastomère thermoplastique selon l'une quelconque des revendications 1 à 4, dans lequel les monomères d'acrylate sont sélectionnés dans le groupe de méthyl(méth)acrylate, éthyl(méth)acrylate, butyl(méth)acrylate, éthylhexyl(méth)acrylate, glycidyl(méth)acrylate, acide méthacrylique, anhydride maléique et hexanediol(méth)acrylate.

6. Elastomère thermoplastique selon l'une quelconque des revendications 1 à 5, dans lequel l'initiateur radicalaire est un peroxyde.

7. Elastomère thermoplastique selon l'une quelconque des revendications précédentes, dans lequel les monomères d'acrylate polymérisés et réticulés forment de 1 à 90 parties en poids, en particulier de 10 à 70 parties en poids, du polymère total.

8. Elastomère thermoplastique selon l'une quelconque des revendications 1 à 7, dans lequel l'imprégnation et la polymérisation ont été réalisés en plusieurs étapes.

9. Elastomère thermoplastique selon l'une quelconque des revendications 1 à 8, dans lequel il a été composé après les étapes d'imprégnation et de polymérisation.

10. Elastomère thermoplastique selon la revendication 9, dans lequel des polymères compatibles avec la phase continue et/ou la phase dispersée ont été ajoutés.

11. Elastomère thermoplastique selon la revendication 9 ou 10, dans lequel un agent de compatibilité a été ajouté.

12. Elastomère thermoplastique selon l'une quelconque des revendications 9 à 11, dans lequel un agent plastifiant a été ajouté.

13. Elastomère thermoplastique selon la revendication 12, dans lequel l'agent plastifiant est un agent plastifiant ester.

14. Elastomère thermoplastique selon l'une quelconque des revendications 9 à 13, dans lequel un agent de réticulation a été ajouté.

15. Elastomère thermoplastique selon la revendication 14, dans lequel l'agent de réticulation contient plusieurs groupes insaturés.

16. Elastomère thermoplastique selon la revendication 14, dans lequel l'agent de réticulation est une résine phénolique durcisseur.

17. Produit contenant un élastomère thermoplastique selon l'une quelconque des revendications 1 à 16, dans lequel il est constitué par une méthode de traitement quelconque utilisée pour les thermoplastiques et les élastomères thermoplastiques.

18. Méthode de production d'un élastomère thermoplastique présentant une bonne résistance à la chaleur et aux huiles, **caractérisé par** l'imprégnation d'un copolymère de polycondensation résistant à la chaleur contenant des segments souples avec des monomères d'acrylate et des initiateurs radicalaires et la polymérisation et la réticulation des monomères à l'intérieur des pastilles.
